# EUROPEAN PATENT SPECIFICATION

(11) **EP 0 963 726 B1**
(45) Date of publication and mention of the grant of the patent: **01.08.2001**
(21) Application number: 99200626.2
(22) Date of filing: 04.03.1999
(51) Int. Cl.: A47J 36/16, A47J 43/046, A47J 42/56

(54) **Electric food processor for home use**
Elektrisches Haushaltsgerät
Machine électrique domestique

(30) Priority: 10.06.1998 ES 9801229
(43) Date of publication of application: 15.12.1999
(73) Proprietor: HISPAINOX S.A., E-46018 Valencia (ES)
(72) Inventor: Cervera Palomares, Vicente D. (HISPAINOX), Quart de Poblet (Valencia) (ES)
(74) Representative: Ungria Lopez, Javier

(56) References cited:
- DE-A- 4 414 825
- FR-A- 2 646 074
- US-A- 2 577 916
- US-A- 3 952 538
- US-A- 4 887 909
- US-A- 4 892 413
- US-A- 5 432 306

## Description

### OBJECT OF THE INVENTION

As expressed in the title of this specification, the present invention refers to an electric food processor for home use, whose purpose consists of providing a food processor of those that permit, aside from beating and grinding, the heating of food independently of whether or not they are being beaten or ground, but including novel characteristics such as great thermal insulation that prevents the user from being burnt when coming into contact with the food processor and great acoustic insulation that determines very silent operation of the food processor and with very scarce transmission of vibrations. Besides, the cited thermal insulation allows use of the food processor as a thermos flask for cold or hot products.

Other purposes of the invention consist of including a safety device that prevents that the food processor can be put into operation if its cover is not in place and, that, when the food processor is operating, prevents removal of said cover from its place unless the food processor has been deactivated previously by means of the corresponding control.

Other objectives of the invention are the provision of some supports or legs that facilitate a good seating of the food processor and a scarce transmission of vibrations, provision of some controls that prevent grease or moisture from entering through said controls towards the inside of the food processor, and the provision of an efficient cooling mechanism of the corresponding motor of the food processor.

### BACKGROUND OF THE INVENTION

Different registrations of food processors or parts thereof are known, such as for example, utility models 223804, 247922, 257240, 261958 and 167729.

These registrations, as well as the food processors known in the present prior art, have inconveniences such as the high noise level that they produce during their operation, or the lack of thermal insulation that can cause burns or accidents in users. An electric feed processor according to the preamble of claim 1 is known from document DE-A-4414825.

On the other hand, existing food processors lack suitable safety devices that in some way prevent the user's hand from being introduced between the corresponding blades during operation of the food processor.

Besides, many of the known food processors have the inconvenience that they break down prematurely due to the entrance of water or other products through the operating controls, as these controls are not conveniently designed.

### DESCRIPTION OF THE INVENTION

In order to achieve the objectives and to avoid the inconveniences indicated above, the invention consists of an electric food processor for home use, that is formed by a body comprised of two frames, a top one and a bottom one, that form a volume in whose top part there is a stainless steel outside container and that has an opening in its top part in order to introduce the beater container, which has in its inside a set of blades with their bearing, in order to carry out the functions of a beater and grinder, in terms of the revolutions that are transmitted to it from an electric motor with its elastic coupling located in the volume formed by the two cited frames. The beater container has in its top part a circular ring in which inserts a double cover in turn provided with a double plug that closes a hole existing in the center of the cited container cover.

The housing of the beater container is formed by a bottom inside container, that has in its bottom part a heating O-ring, which has a fitting with a truncated-cone shaped surface in its inside surface of the toroid, in order to receive the bottom part of the beater container, and that through said conical fitting, the heat of the heating ring of the same is transmitted, and thus the heating or cooking of the contents of said container is carried out, depending on the temperature which is applied to the contents. The heating resistor is fixed between the inside container and the outside container, by means of elastic resistance joints that also have a toroidal section, and made out of a material resistant to the temperature at which the resistor is going to be made to operate at. This special design of the fitting and fastening of the beater container, allows that with slight pressure in the vertical direction downwards exerted on its double cover, said beater container to remain perfectly locked. The double cover has in the bottom a cover joint made of elastic and temperature resistant material, which rests on the top edge of the beater container, providing it with perfect fastening and vibration damping, since the beater container unit and the heating resistor are floating by means of the cited resistance joints and by means of said cover joint.

The housing of the beater container, along with thermal-acoustic insulation that surrounds the entire unit and that is placed between the cited outside container and the inside container, as well as the double cover with its corresponding double plug (with an inside chamber), provide the processor of the invention with the two most important, novel and advantageous characteristics, which are its great thermal insulation and its excellent acoustic insulation.

The thermal insulation refers to the beater container as well as to the heating 0-ring with regard to the user, there not being any danger of burns or accidents during use of the processor. Besides, due to the special design of the heating area, the invention has the characteristic of keeping hot or cold the food that is placed into it (thermal effect), according to the process to which we have subjected said food, keeping it at such a temperature for a prolonged period of time until it is going to be used.

The acoustic insulation is defined by the elements that surround the beater container, such as the inside container, the thermal-acoustic insulation and the outside container, and by an acoustic insulation that surrounds the motor of the food processor, thus forming a unit that acoustically insulates from the outside the two elements capable of producing noise, which are the beater-grinder container by the knocking effect of the blades against the goods, and the operating motor by its own operating noise.

On the other hand, the food processor of the invention has a control panel by means of which the start of the apparatus in all of its parameters is controlled and these parameters are: rotation speed of the blades, usage temperature of the beater container and of the heating O-ring and programming time until said ring disconnects, activating at the end of this programming time a sound alarm of the corresponding timer.

This control panel has the novelty of its total leak-proof nature, offering an absolute guarantee against breakdowns produced by the entering of moisture in the inside components, aside from protecting the user against accidents, etc.

This aspect is very important since the food processor of the invention tends to be used in the kitchen and therefore, it is subjected to very particular conditions of moisture, grease and even the direct pouring of liquids.

For this purpose, the assembly of the front controls has been resolved in a very special manner. Hence, the frame of the food processor is recessed in the area of the control panel and from it emerge some tubular extensions, in which is inserted a guide bushing through whose inside is introduced the neck of the corresponding control button up to the end, thus remaining inserted. These couplings are carried out tightly, for which reason the leak-proofness is ensured, which is also contributed to by a bellmouthed shape of the buttons that are inserted in the respective circular recesses of the corresponding cover.

Aside from the front controls there is a top control that is a push button that does not have the cited guide bushing, but its vertical arrangement makes it impossible for liquid to rise through the corresponding tubular extension of the frame.

Another characteristic of the food processor of the invention is a safety device that prevents the apparatus from going into operation if the cover is not in place, and besides, if the apparatus is in operation, this device prevents the cover from being removed until the operating control has been put in the stop position.

A component of this safety device is the outside part of the above mentioned double cover, which has in the corresponding closing pins with the circular ring of the beater container some housings for which two safety bolts lock over them. These bolts pass through the cited ring and are constantly impelled upward by the action of some springs that are housed in a two microswitch support fastened to said ring. These microswitches are series connected to the feed supply of the motor of the food processor, in such a way that when one of them is open said motor cannot start operating. The operation of the safety device is as follows:

When the food processor does not have its double cover on, the safety bolts abut upward with the circular ring of the beater container impelled by the above mentioned springs, in such a way that one of the microswitches is in its inoperative position and has its contacts open, and therefore, the feed circuit of the motor is interrupted. In this position, the second microswitch is also in the inoperative position, but with its contacts closed; in this way, one contact open and the other one closed, these contacts do not allow current to pass to the motor of the food processor.

During the closing of the cover, when the cover turns clockwise, said cover closes when its closing pins slide under the pins of the circular ring of the beater container. At a certain point the pin of the cover produces a sliding downward of one of the safety bolts, in such a way that said bolt acts on the second safety microswitch, changing its closed position to the open position. In this situation the two safety microswitches have the contacts open, and therefore, the motor still cannot operate.

Once the cover has turned and closed totally, the safety bolts change position by the effect of the pin of the cover, since the first bolt is pushed downward, while the second bolt finds a housing on the pin and slides upward, whereby both safety microswitches that were in the open circuit position pass to the closed position. Therefore, the motor circuit is activated in order to be able to operate.

The position described with the cover closed permits the motor to operate if we actuate the control button that actuates the control circuit that puts the motor into operation. Said button has integral in its rotation movement a control button cam, which in turn actuates a safety lever. Once the lever is released from the effect of the cam, a spring of the lever makes the lever turn, it being placed under the second bolt and preventing it from lowering. When placing the control button in any of the operating positions, this second bolt is immobilized in the displacement downward, since the safety lever prevents it from doing so. In this position of the second bolt the cover cannot open, since the housing of the pin of the cover prevents it from doing so, since the end of the bolt cannot slide under the pin since in order to be able to open the cover it needs to move said bolt downward. Once the operation in the beater container has ended, the control button is moved to the stop position, whereby the control button cam actuates on the safety lever and this lever in turn frees the second bolt so that this bolt may move downward, and so that in turn it allows the cover to turn moving the pin thereof until the cover is totally released from the pin of the circular ring of the beater container. In this way, one can only proceed to open the housing of the beater container, when the operating button of the motor is in the cited stop position. This prevents the cover from being removed when the motor is in operation, thus preventing the safety risk for the user if his hand were accidentally introduced inside the container.

Another characteristic of the food processor of the invention consists of its having a temperature probe that takes the temperature of the beater container in order to control said temperature from the control panel.

The food processor that is being described has the possibility of use as an apparatus to heat liquids, soups, cream soups, etc. without the need of putting the motor in operation and with a thermal effect, that is to say, the possibility of keeping food hot for a prolonged period of time. Likewise, the same thing occurs with cold food, such as ice cream, soups, etc., that may also be kept for a long period of time in such conditions due to the cited thermal effect. For these functions of just heating or maintaining the temperature of food, the beater container itself or other similar containers may be used without the corresponding blade unit, in such a way that in such a case only the temperature control and the operating time control would operate.

On the other hand, the support legs of this food processor has an advantageous arrangement of its elements. Each leg has inserted an elastomer plug that actuates as a support cap and has in its bottom part a circular recess formed by a ring-shaped projection that functions as a suction pad to adhere the machine to the support surface. Besides, this elastomer plug receives at the top a flexible plastic rod that is connected by its top end to the main frame of the food processor, in such a way that it acts as a transmitter of the container towards the cited plug in the support area of said rod and plug.

The elasticity itself of the rod and of the elastomer plug constitutes a very effective means to compensate the movements (preferably vibrations) that the machine produces, preventing them from being transmitted to the outside means (support surface).

Finally, another outstanding characteristic of the present food processor, consists of the use of a fan that introduces air through a mouth. This air is channeled through a cavity of the control panel, thus cooling its components, its expulsion ending in the area of the motor in order to cool said motor. This fan is activated by any function of the apparatus, in such a way that even in the heating operation cooling continues.

Hereinafter to provide a better understanding of this specification and forming an integral part thereof, some figures in which the object of the invention has been represented in an illustrative and non-restrictive manner are accompanied.

### BRIEF DESCRIPTION OF THE FIGURES

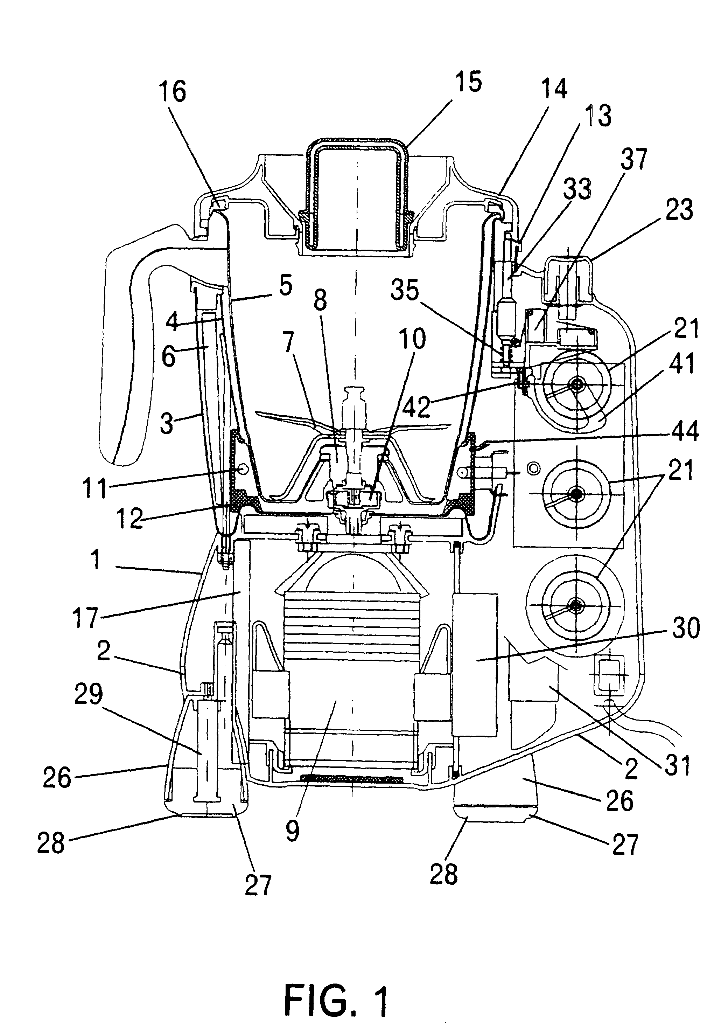

Figure 1 represents a raised sectioned view of the electric food processor for home use, made in accordance with the present invention showing its component parts.

Figure 2 represents a sectioned profile view of the part that includes the controls in the food processor referred to in previous figure 1.

Figure 3 represents a profile view of a top part of the food processor referred to in the previous figures, showing a safety device that is included therein, and said device being in a situation corresponding to when the food processor is without its cover.

Figure 4 represents a profile view of a top part of the food processor referred to in the previous figures, showing the safety device alluded to in previous figure 3, and said device being in a situation corresponding to when the food processor is with its cover half closed.

Figure 5 represents a profile view of a top area of the food processor referred to in the previous figures, showing the safety device alluded to in figures 3 and 4, and said device being in a situation corresponding to when the food processor is with its cover completely closed and its motor stopped.

Figure 6 represents a profile view of a top part of the food processor referred to in the previous figures, showing the cited safety device and said device being in a situation corresponding to when the food processor is with its cover completely closed and with its motor in operation.

Figure 7 represents a top plan view of the food processor referred to in the previous figures, showing the cited safety device in the conditions referred to in figure 5, namely, with the cover completely closed and with the motor stopped.

Figure 8 represents a top plan view of the food processor referred to in the previous figures, showing the cited safety device in the conditions referred to in figure 6, namely, with the cover completely closed and with the motor in operation.

### DESCRIPTION OF AN EMBODIMENT OF THE INVENTION

Hereinafter a description is made of en embodiment of the invention, making reference to the numbering used in the figures.

Thus, the electric food processor for home use of this embodiment has a top frame (1) and a bottom frame (2) that define a volume in which in the top there are a stainless steel outside container (3) and a bottomless inside container (4), that give housing to a beater container (5), there being between the inside container (4) and the outside container (3) thermal-acoustic insulation (6) arranged perimetrically and that is going to define excellent temperature, noise and vibration insulation in the food processor of the present embodiment.

The beater container (5) has in its bottom some blades (7) with their bearing (8) for the beating and grinding functions, there being provided for an accessory to beat egg whites and the like that is not shown in the figures as it is conventional. A container without said blades (7) and bearing (8) has also been provided for in order to be used solely for functions of heating and storing food as in a thermos flask.

Under the containers (3) and (4) and inside the frames (1) and (2) is located an electric motor (9) that transmits its movement to the blades (7) by means of an elastic coupling (10).

The inside container (4) has in its bottom end a heating ring (11) that provides a fitting with a reversed truncated-cone shaped volume, with regard to the container of the food processor (5), so that there is greater surface contact of this container (5) with the heating element and therefore a better transmission of heat towards said container (5).

The cited heating ring (11) is fastened between the inside (4) and outside (3) containers by means of some resistance joints (12) made of material resistant to usage temperatures.

The outside container (3) has in its top outside part a perimetric ring (13) that permits insertion of a double cover (14) provided in its center with a double wall plug or double plug (15).

The double cover (14) has underneath a temperature resistant, elastic and perimetric joint (16), that rests on the top edge of the beater container (5) when closing this cover (14) on the perimetric ring (13), in such a way that the container (5) floats between this perimetric joint (16) and the resistance joints (12), facilitating great vibration resistance.

With this shape, the heating ring (11) is surrounded by the thermal-acoustic insulation (6) and by the outside container (3), which prevents the risk of the user being burnt.

Said insulation (6) also prevents the noise produced by the blades (7), and the motor (9) has around it an acoustic insulation (17), in such a way that the operation of the present food processor is very silent.

The controls that the present food processor has are to adjust the rotation speed of the blades (7), to adjust the temperature of the heating ring (11) and to program the time until said ring disconnects, a sound alarm that emits its corresponding sound when said disconnection takes place, being provided for.

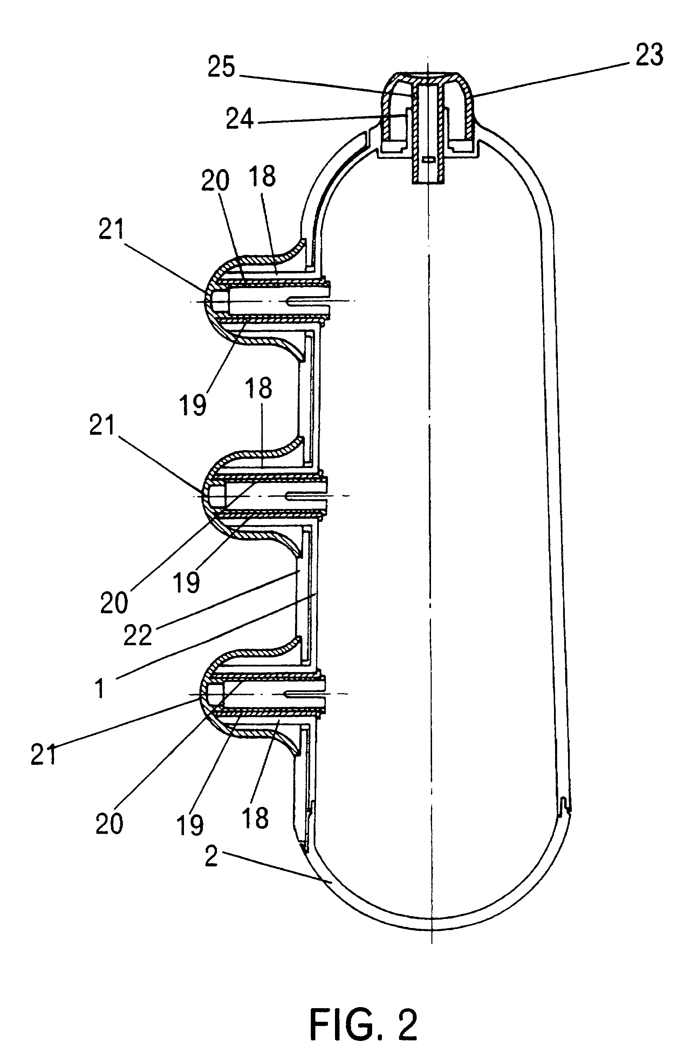

These controls are placed in the front, just as it is shown in figure 2 and they have a special design to prevent liquids from entering inside the control panel.

Hence, the top frame (1) is recessed in the area of the control panel, emerging from said frame (1) some tubular extensions (18) in which respective guide bushings (19) insert tightly. In turn, inside of each guide bushing (19) the neck (20) of the corresponding button (21) is inserted tightly and the button thus remains inserted and leak-proof.

Besides, the buttons (21) have a bellmouthed shape that hampers the passing of liquids towards their inside. The edges of the buttons (21) are inserted in recesses of a cover (22) that is arranged on the top frame (1), just as it is illustrated in figure 2.

Besides the cited buttons (21) arranged in the front, there is a top button (23) corresponding to a push button in which the guide bushing (19) has been eliminated, since its vertical arrangement prevents liquids from rising through the corresponding tubular extension (24).

This top button (23) is placed by tightly introducing its neck (25) in the cited tubular extension (24).

The food processor of the present embodiment has some special legs (26) that facilitate good seating and a scarce transmission of vibrations.

Each leg (26) has underneath an elastomer plug (27) in whose bottom end there is a ring-shaped projection (28) with suction pad functions to provide a better adherence to the corresponding support surface.

In the top part of the plug (27) is inserted a flexible plastic rod (29) which in turn connects at the top to the bottom frame (2).

The elasticity of the rod (29) and of the plug (27) compensate the vibrations produced by the food processor.

Another characteristic of the food processor shown in this embodiment of the invention is the existence of a continuous operation fan (30), in such a way that the fan is connected with any function of the food processor, thus providing good cooling of the elements thereof. This fan (30) introduces air through a mouth (31) and from there it channels the air towards the control panel and towards the motor (9).

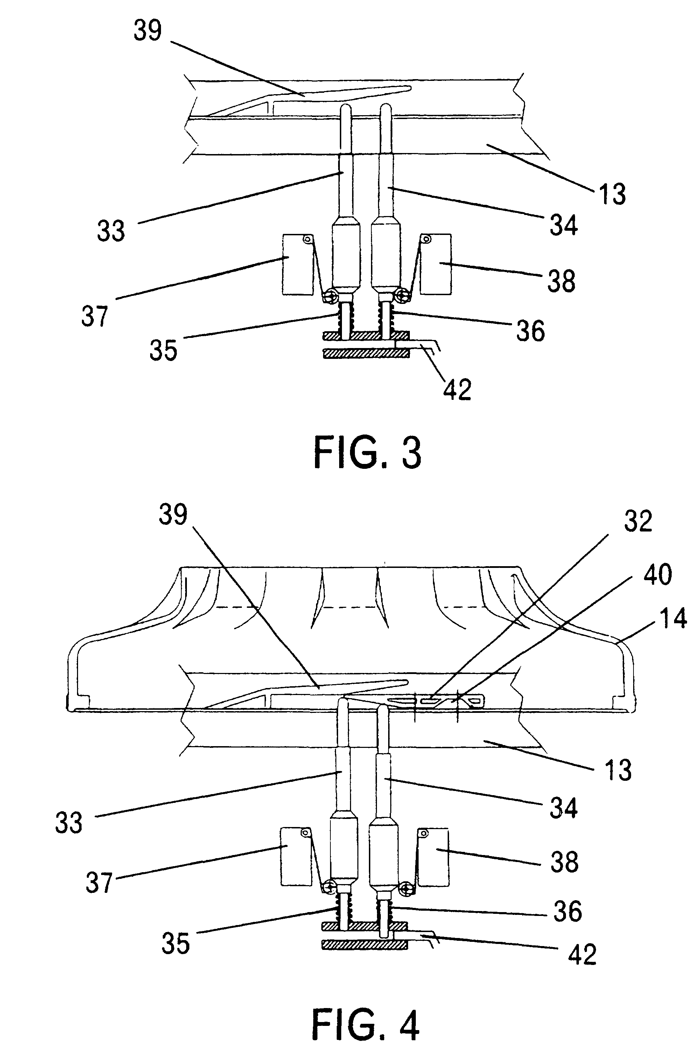

The food processor of the present embodiment has a safety device whose structure and operation are shown in figures 3 to 8. This device prevents the removal of the double cover (14) from its corresponding location when the motor (9) is operating and besides it prevents said motor (9) from starting to operate if said cover (14) has not been put in place correctly.

For this purpose, the double cover (14) has in its closing pins (32) with the perimetric ring (13) of the outside container (3), a special arrangement that acts on two safety bolts (33) and 34).

These bolts (33) and (34) pass through the ring (13) and are constantly pushed upward by the action of respective springs (35) and (36).

The bolts (33) and (34) are connected to respective microswitches (37) and (38), which are series connected to the feed source of the motor (9), in such a way that the opening of any of said microswitches (37) and (38) implies that the motor (9) cannot be operating, or that is to say, in order for the motor (9) to be able to operate both microswitches (37) and (38) must be closed.

When pushing the bolt (33) downward overcoming the force of the spring (35), the associated microswitch (37) that was open closes, while when pressing the bolt (34) downward, overcoming the force of the spring (36), the associated microswitch (38) that was closed opens.

It is not possible to press directly by hand the bolts (33) and (34) due to the existence of a flange (39) (of the ring (13)) that covers them. However, when putting the cover (14) in place, the closing pins (32) penetrate under said flange (39) and actuate on the bolts (33) and (34).

Without putting the cover (14) in place the microswitch (38) is closed, but the microswitch (37) is open, whereby the motor (9) cannot operate. This situation is represented in figure 3.

When putting the cover (14) in place the pin (32) first attacks the bolt (34) pushing it downward, whereby the microswitch (38) opens, therefore with the cover partially in place the motor (9) cannot operate (situation of figure 4).

If one continues closing the cover (14) the pin (23) also pushes the bolt (33), in such a way that the microswitch (37) closes, but since the microswitch (38) is open the motor (9) still cannot operate.

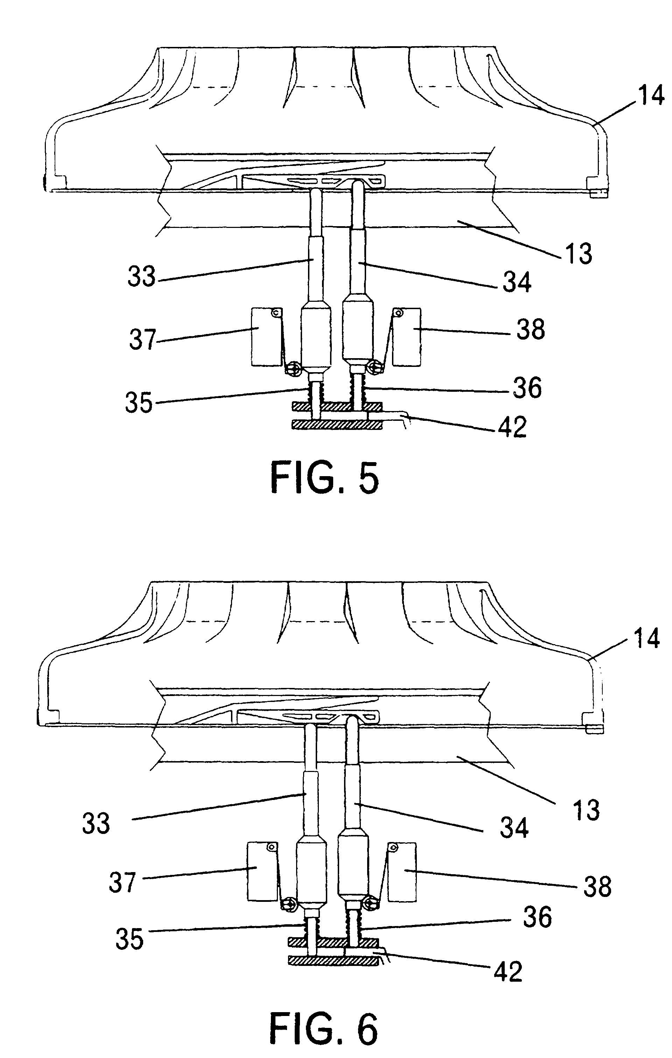

Once the cover (14) has finished closing the bolt (34) fits in a housing (40) of the pin (32), for which reason said bolt (34) rises and the microswitch (38) is closed just like microswitch (37), whereby the motor (9) may now operate. This situation is represented in figures 5 and 6.

The motor (9) control has a cam (41) that acts on a safety lever (42), in such a way that in the stop position of the cited control (situation of figure 5) this lever (42) is withdrawn and the cover (14) can be removed, while in the rest of the positions of said control (situation of figure 6), the lever (42) is under the bolt (34) preventing its movement and therefore preventing it from coming out of housing (40), whereby the cover (14) cannot be removed.

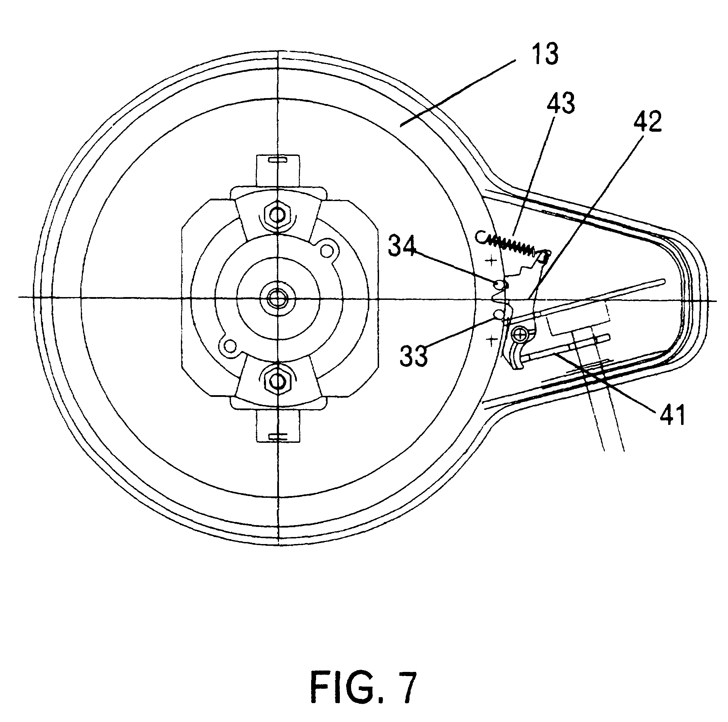

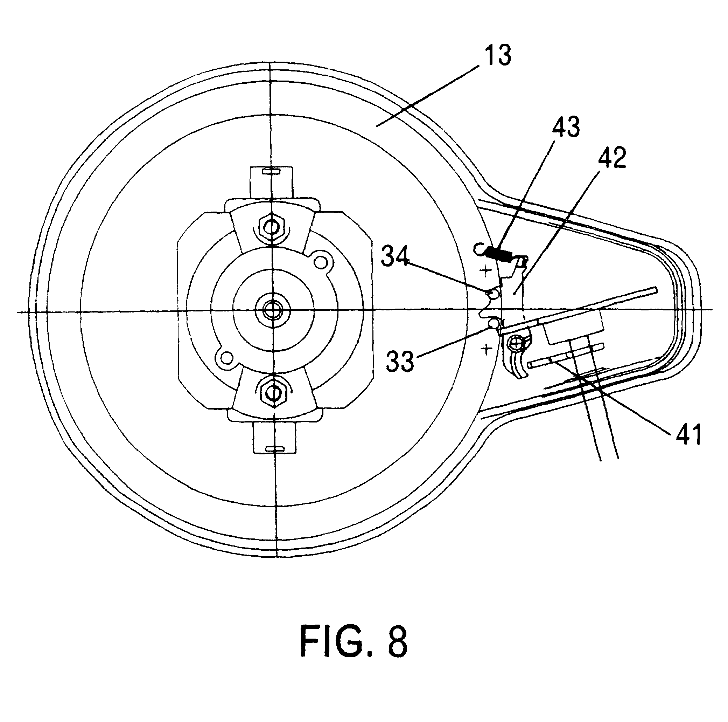

The situations of figures 5 and 6 respectively are reproduced in figures 7 and 8 but the food processor is seen in a plan view in order to see better the mechanism of the cited cam (41) and the safety lever (42).

Hence, in figure 7 the motor (9) control is in the stop position and its cam (41) pushes the lever (42) overcoming the force of a spring (43) so that said lever (42) does not interact with the bolt (34); while in figure 8 the motor (9) control is in any other position other than the stop position, by which its cam (41) stops pushing the lever (42) and the recovery force of the spring (43) brings said lever (42) under the bolt (34).

Finally, it should be indicated that the food processor of the present embodiment has a temperature probe (44) that takes the temperature of the beating container (5) in order to control the temperature from the control panel.

## Claims

1. Electric food processor for home use, that has beating-grinding means, as well as food heating means, the beating-grinding means consisting of some blades (7) arranged in the bottom of a beater container (5) and connectable to an electric motor (9); characterized in that it has a top frame (1) and a bottom frame (2) that define a volume in which in the top there is an outside container (3) and an inside container (4) between which there is a thermal-acoustic insulation (6), the cited heating means being arranged in the bottom part of the inside container (4) and this inside container (4) receiving the beater container (5), in such a way that said thermal-acoustic insulation (6) prevents the danger of users from being burnt, permits the use of the beater container (5) as a thermos flask that maintains the temperature of the food, and together with an acoustic insulation (17) that surrounds the (9) motor, determines very silent and vibration free operation.

2. Electric food processor for home use, according to claim 1, characterized in that the beater container (5) can be replaced by a container without blades for the purpose of heating food and/or maintaining their temperature like a thermos flask without beating or grinding them.

3. Electric food processor for home use, according to claim 1, characterized in that the cited heating means consist of a heating ring (11) that provides a fitting with a reversed truncated-cone shaped volume, with regard to the beater container (5), this heating ring (11) being fastened between the inside container (4) and the outside container (3) by means of resistance joints (12) made of material resistant to the usage temperature; while the outside container (3) has in its outside top part a perimetric ring (13) that permits insertion of a double cover (14) that has underneath an elastic perimetric joint (16) resistant to the usage temperature; in such a way that when putting said double cover (14) in place the beater container (5) floats between the cited perimetric joint (16) and the cited resistance joints (12).

4. Electric food processor for home use, according to claim 3, characterized in that said double cover (14) has in its center a double wall plug (15).

5. Electric food processor for home use, according to claim 1, characterized in that it has some front controls that are formed as tubular extensions (18) of the top frame (1), inserting tightly in these extensions (18) some guide bushings (19) in which in turn some necks (20) of the corresponding buttons (21) are tightly introduced, in order to define some leak-proof fittings that prevent liquids from entering inside.

6. Electric food processor for home use, according to claim 5, characterized in that said guide bushings (19) may be eliminated in the controls with a vertically arranged top button (23).

7. Electric food processor for home use, according to claim 5, characterized in that said buttons (21) have a bellmouthed shape with their edges inserted in recesses of a cover (22) arranged on the top frame (1), for the purpose of making it even more difficult for liquids to enter inside.

8. Electric food processor for home use, according to claim 1, characterized in that it has some special legs (26) provided underneath with an elastomer plug (27) in whose bottom end there is a ring-shaped projection (28) which functions as a suction pad, being inserted in the top part of said plug (27) a flexible plastic rod (29), said plastic rod in turn connecting at its top with the bottom frame (2), thus forming a structure that compensates the vibrations of the cited food processor.

9. Electric food processor for home use, according to claims 1 and 3, characterized in that it has some safety means that prevent the opening of the double cover (14) when the motor (9) is in operation, also preventing operation of the motor (9) when the cited double cover (14) has not been put correctly and totally in place.

10. Electric food processor for home use, according to claim 9, characterized in that said safety means consist of two safety bolts (33 and 34) that pass through the perimetric ring (13), that are pushed upward by respective springs (35 and 36), that are covered by a flange (39) of said perimetric ring (13) and that are connected to respective microswitches (37 and 38) series connected to the feed source of the motor (9), in such a way that when pressing downward the first one of said bolts (33), the corresponding microswitch (37) passes from open to closed, while when pressing downward the second one of said bolts (34) the corresponding microswitch (38) passes from closed to open; existing in the double cover (14) a closing pin (32) which when placing the cover (14) in the perimetric ring (13) of the outside container (3) is introduced between the bolts (33 and 34) and the flange (39) pressing downward first of all the second bolt (34), then the first bolt (33) and finally, in the complete closing of the cover (14), releasing from the pressure the second bolt (34) when said bolt is in a housing (40) of the cited pin (32); there being in the corresponding control of the motor (9) a cam (41) that in the stop position of said control pushes a lever (42) overcoming the force of a spring (43), in such a way that this lever (42) does not interact with the bolt (34), while in any other position of the cited control the cam (41) loses contact with the lever (42) and the lever is, by the recovering of the spring (43), under the second bolt (34) preventing its movement and its possible discharge from the housing (40) of the cited pin (32).

## Revendications

1. Appareil électrique de traitement d'aliments à usage domestique, qui comporte des moyens de battage-broyage ainsi que des moyens de chauffage des aliments, les moyens de battage-broyage étant constitués par des lames (7) disposées dans le fond d'un récipient de battage (5) et pouvant être connectés à un moteur électrique (9);
caractérisé en ce qu'il possède un cadre supérieur (1) et un cadre inférieur (2), qui définissent un volume à la partie supérieure duquel sont disposés un récipient extérieur (3) et un récipient intérieur (4), entre lesquels est disposé un dispositif d'isolation thermo-acoustique (6), les moyens de chauffage cités étant disposés dans la partie inférieure du récipient intérieur (4) et ce récipient intérieur (4) logeant le récipient de battage (5), de telle sorte que ledit dispositif d'isolation thermo-acoustique (6) empêche le risque que des utilisateurs se brûlent, permet l'utilisation du récipient de battage (5) en tant que bouteille Thermos qui maintient la température de l'aliment et détermine, conjointement avec un dispositif d'isolation acoustique (17) qui entoure le moteur (9), un fonctionnement très silencieux et sans vibrations.

2. Appareil électrique de traitement d'aliments à usage domestique selon la revendication 1, caractérisé en ce que le récipient de battage (5) peut être remplacé par un récipient sans lames pour chauffer un aliment et/ou maintenir sa température comme dans une bouteille Thermos, sans battage ni broyage de l'aliment.

3. Appareil électrique de traitement d'aliments à usage domestique selon la revendication 1, caractérisé en ce que les moyens de chauffage indiqués sont constitués par un anneau chauffant (11) qui établit un ajustement avec un volume en forme de tronc de cône renversé, par rapport au récipient de battage (5), cet anneau chauffant (11) étant fixé entre le récipient intérieur (4) et le récipient extérieur (3) au moyen de joints à résistance (12) formés d'un matériau résistant à la température d'utilisation; tandis que le récipient extérieur (3) contient, dans sa partie supérieure extérieure, un anneau périphérique (13) qui permet l'insertion d'un double capot (14) qui comporte, au-dessous de lui, un joint périphérique élastique (16) résistant à la température d'utilisation; de telle sorte que, lorsque ledit double capot (14) est mis en place, le récipient de battage (5) flotte entre ledit joint périphérique (16) et lesdits joints à résistances (12).

4. Appareil électrique de traitement d'aliments à usage domestique selon la revendication 3, caractérisé en ce que ledit double capot (14) comporte en son centre un bouchon à paroi double (15).

5. Appareil électrique de traitement d'aliments à usage domestique selon la revendication 1, caractérisé en ce qu'il possède certaines unités de commande frontales, qui sont agencées sous la forme de prolongements tubulaires (18) du cadre supérieur (1), prolongements (18) dans lesquels sont insérés étroitement des manchons de guidage (19), dans lesquels à leur tour sont introduits dans une position serrée certains cols (20) des boutons correspondants (21), de manière à définir certains raccords étanches aux fuites, qui empêchent la pénétration de liquides vers l'intérieur.

6. Unité électrique de traitement d'aliments à usage domestique selon la revendication 5, caractérisée en ce que lesdits manchons de guidage (19) peuvent être supprimés dans les unités de commande comportant un bouton supérieur (23) disposé verticalement.

7. Unité électrique de traitement d'aliments à usage domestique selon la revendication 5, caractérisée en ce que lesdits boutons (21) possèdent une forme en cloche dont les bords sont insérés dans les renfoncements d'un capot (22) disposé sur le cadre supérieur (1), pour rendre plus difficile la pénétration de liquides vers l'intérieur.

8. Appareil électrique de traitement d'aliments à usage domestique selon la revendication 1, caractérisé en ce qu'il comporte des branches spéciales (26) équipées, sur le côté inférieur, d'un bouchon élastomère (27), dans l'extrémité inférieure duquel est disposée une partie saillante de forme annulaire (28), qui agit en tant que tampon d'aspiration, en étant insérée dans la partie supérieure dudit bouchon (27), une tige en matière plastique flexible (29), ladite tige en matière plastique étant raccordée à son tour, au niveau de sa partie supérieure, au cadre inférieur (2), en formant ainsi une structure qui compense les vibrations dudit appareil de traitement d'aliments.

9. Appareil électrique de traitement d'aliments à usage domestique selon les revendications 1 et 3, caractérisé en ce qu'il possède certains moyens de sécurité qui empêchent l'ouverture du double capot (14) lorsque le moteur (9) fonctionne, en empêchant également le fonctionnement du moteur (9) lorsque ledit capot double (14) n'a pas été mis en place correctement et complètement.

10. Appareil électrique de traitement d'aliments à usage domestique selon la revendication 9, caractérisé en ce que lesdits moyens de sécurité sont constitués par deux boulons de sécurité (33 et 34), qui traversent la bague périphérique (13), qui sont repoussés vers le haut par des ressorts respectifs (35 et 36), qui sont recouverts par une bride (39) de ladite bague périphérique (13) et qui sont connectés à des micro-interrupteurs respectifs (37 et 38), branchés en série avec la source d'alimentation du moteur (9), de telle sorte que lors de l'enfoncement du premier desdits boulons (33), le micro-interrupteur correspondant (37) passe de l'état ouvert à l'état fermé, alors que lors du pressage vers le bas du second desdits boulons (34), le micro-interrupteur correspondant (38) passe de l'état fermé à l'état ouvert; dans le capot double (14) il existe une broche de fermeture (32) qui, lors de la mise en place du capot (14) dans l'anneau périphérique (13) du récipient extérieur (30), est introduite entre les boulons (33 et 34) et la bride (39) en repoussant vers le bas tout d'abord l'ensemble du second boulon (34), puis le premier boulon (33) et enfin libérant, lors de la fermeture complète du capot (14), la pression appliquée au second boulon (34), lorsque ledit boulon est dans un boîtier (40) pour ladite broche (32); une came (41) faisant partie de la commande correspondante du moteur (9), came qui lorsque ladite commande est dans la position d'arrêt, repousse un levier (42) en surmontant la force d'un ressort (43), de telle sorte que ce levier (42) ne coopère pas avec le boulon (34) alors que dans n'importe quelle autre position de ladite commande, la came (41) est écartée de tout contact avec le levier (42) et que, sous l'effet du rétablissement du ressort (43) le levier est au-dessous du second boulon (34), ce qui empêche son déplacement et son évacuation possible hors du boîtier (40) de ladite broche (40).

## Patentansprüche

1. Elektrische-Haushalts-Lebensmittelverarbeitungsmaschine, die eine Schlag-Mahl-Einrichtung sowie eine Lebensmittelerhitzungseinrichtung aufweist, wobei die Schlag-Mahl-Einrichtung aus Klingen (7) besteht, die im Boden eines Schlagmühlenbehälters (5) angeordnet sind und mit einem Elektromotor (9) verbunden werden können, **dadurch gekennzeichnet,** dass sie ein oberes Gehäuse (1) und ein unteres Gehäuse (2) aufweist, die ein Volumen bilden, in dessen Oberteil sich ein Außenbehälter (3) und ein Innenbehälter (4) befinden, zwischen denen eine thermo-akustische Isolierung (6) angeordnet ist, wobei die erwähnte Erhitzungseinrichtung im unteren Teil des Innenbehälters (4) angeordnet ist und dieser Innenbehälter (4) den Schlagmühlenbehälter (5) so aufnimmt, dass die thermo-akustische Isolierung (6) die Verbrennungsgefahr für Benutzer ausschließt, den Einsatz des Schlagmühlenbehälters (5) als Thermosbehälter ermöglicht, der die Temperatur des Lebensmittels aufrechterhält, und zusammen mit einer akustischen Isolierung (17), die den Motor (9) umschließt, sehr ruhige und vibrationsfreie Funktion ermöglicht.

2. Elektrische Haushalts-Lebensmittelverarbeitungsmaschine nach Anspruch 1, **dadurch gekennzeichnet,** dass der Schlagmühlenbehälter (5) gegen einen Behälter ohne Klingen ausgetauscht werden kann, um Lebensmittel zu erhitzen und/oder ihre Temperatur wie in einem Thermosbehälter aufrechtzuerhalten, ohne sie zu schlagen bzw. zu mahlen.

3. Elektrische Haushalts-Lebensmittelverarbeitungsmaschine nach Anspruch 1, **dadurch gekennzeichnet,** dass die erwähnte Erhitzungseinrichtung aus einem Heizring (11) besteht, der in Bezug auf den Schlagmühlenbehälter (5) ein Passteil mit einem umgekehrt kegelstumpfförmigem Volumen bildet, wobei dieser Heizring (11) mit Widerstands-Verbindungselementen (12) zwischen dem Innenbehälter (4) und dem Außenbehälter (3) befestigt ist, die aus einem Material bestehen, das beständig gegenüber der Betriebstemperatur ist, wobei der Außenbehälter (3) in seinem äußeren oberen Teil einen Umfangsring (13) aufweist, der das Einführen eines Doppel-Verschlussdeckels (14) ermöglicht, unter dem sich ein elastisches Umfangs-Verbindungselement (16) befindet, das gegenüber der Betriebstemperatur beständig ist, und zwar so, dass, wenn der Doppel-Verschlussdeckel (14) positioniert wird, der Schlagmühlenbehälter (5) zwischen dem erwähnten Umfangs-Verbindungselement (16) und den erwähnten Widerstands-Verbindungselementen (12) schwebt.

4. Elektrische Haushalts-Lebensmittelverarbeitungsmaschine nach Anspruch 3, **dadurch gekennzeichnet,** dass der Doppel-Verschlussdeckel (14) in seiner Mitte einen doppelwandigen Stopfen (15) aufweist.

5. Elektrische Haushalts-Lebensmittelverarbeitungsmaschine nach Anspruch 1, **dadurch gekennzeichnet**, dass sie vordere Bedienelemente aufweist, die als röhrenförmige Vorsprünge (18) des oberen Gehäuses (1) ausgebildet sind, wobei in diese Vorsprünge (18) enganliegend Führungsbuchsen (19) eingeführt werden, in die wiederum Schafte (20) der entsprechenden Knöpfe (21) enganliegend eingeführt sind, so dass austrittssichere Anschlussteile entstehen, die verhindern, dass Flüssigkeiten in das Innere eindringen.

6. Elektrische Haushalts-Lebensmittelverarbeitungsmaschine nach Anspruch 5, **dadurch gekennzeichnet**, dass die Führungsbuchsen (19) in den Bedienelementen durch einen vertikal angeordneten oberen Knopf (23) ersetzt werden können.

7. Elektrische Haushalts-Lebensmitteiverarbeitungsmaschine nach Anspruch 5, **dadurch gekennzeichnet**, dass die Knöpfe (21) eine Glockenform haben und ihre Ränder in Aussparungen einer Abdeckung (22) eingeführt sind, die an dem oberen Gehäuse (1) angeordnet ist, um das Eindringen von Flüssigkeiten ins Innere noch mehr zu erschweren.

8. Elektrische Haushalts-Lebensmittelverarbeitungsmaschine nach Anspruch 1, **dadurch gekennzeichnet,** dass sie spezielle Füße (26) aufweist, die darunter mit einem Elastomerstopfen (27) versehen sind, in dessen unterem Ende ein ringförmiger Vorsprung (28) vorhanden ist, der als Saugnapf dient, wobei in den oberen Teil des Stopfens (27) ein flexibler elastischer Stab (29) eingeführt ist und der Kunststoffstab seinerseits an seiner Oberseite mit dem unteren Gehäuse (2) verbunden ist, so dass eine Struktur entsteht, die die Schwingungen der erwähnten Lebensmittelverarbeitungsmaschine ausgleicht.

9. Elektrische Haushalts-Lebensmittelverarbeitungsmaschine nach Anspruch 1 und 3, **dadurch gekennzeichnet,** dass sie eine Sicherheitseinrichtung aufweist, die das Öffnen des Doppel-Verschlussdeckels (14) verhindert, wenn der Motor (9) in Funktion ist, und die des Weiteren Funktion des Motors (9) verhindert, wenn der erwähnte Doppel-Verschlussdeckel (14) nicht ordnungsgemäß und vollständig angebracht worden ist.

10. Elektrische Haushalts-Lebensmlttelverarbeitungsmaschine nach Anspruch 9, **dadurch gekennzeichnet,** dass die Sicherheitseinrichtung aus zwei Sicherheitsbolzen (33 und 34) besteht, die durch den Umfangsring (13) hindurchtreten, die durch entsprechende Federn (35 und 36) nach oben gedrückt werden, die durch einen Flansch (39) des Umfangsrings (13) abgedeckt werden und die mit entsprechenden Mikroschaltem (37 und 38) verbunden sind, die in Reihe zu der Speisequelle des Motors (9) geschaltet sind, und zwar so, dass, wenn der erste der Bolzen (33) nach unten gedrückt wird, der entsprechende Mikroschalter (37) von offen zu geschlossen übergeht, während, wenn der zweite der Bolzen (34) nach unten gedrückt wird, der entsprechende Mikroschalter von geschlossen zu offen übergeht, und dass in dem Doppel-Verschlussdeckel (14) ein Verschlussstift (32) vorhanden ist, der, wenn der Verschlussdeckel (14) in den Umfangsring (13) des Außenbehälters (3) eingesetzt wird, zwischen die Bolzen (33 und 34) und den Flansch (39) eingeführt wird und zunächst den zweiten Bolzen (34), dann den ersten Bolzen (33) nach unten drückt und schließlich, den Verschlussdeckel (14) vollständig verschließend, den Druck auf den zweiten Bolzen (34) löst, wenn sich der Bolzen in einer Aufnahme (40) des erwähnten Stiftes (32) befindet, wobei in dem entsprechenden Bedienelement des Motors (9) ein Nocken (41) vorhanden ist, der in der Anschlagposition des Bedienelementes, die Kraft einer Feder (43) überwindet und so auf einen Hebel (42) drückt, dass dieser Hebel (42) nicht mit dem Bolzen (34) in Wechselwirkung tritt, während in jeder anderen Position des erwähnten Bedienelementes der Nocken (41) Kontakt mit dem Hebel (42) verliert und der Hebel durch die Rückverformung der Feder (43) sich unter dem zweiten Bolzen (34) befindet und seine Bewegung und damit das mögliche Austreten aus der Aufnahme (40) des erwähnten Stiftes (32) verhindert.
